(19) Europäisches Patentamt
European Patent Office
Office européen des brevets

(11) **EP 1 928 260 B1**

(12) **EUROPÄISCHE PATENTSCHRIFT**

(45) Veröffentlichungstag und Bekanntmachung des Hinweises auf die Patenterteilung:
**21.01.2015 Patentblatt 2015/04**

(21) Anmeldenummer: **06793402.6**

(22) Anmeldetag: **11.09.2006**

(51) Int Cl.:
*A23K 1/165* (2006.01)  *A23K 1/00* (2006.01)

(86) Internationale Anmeldenummer:
**PCT/EP2006/066220**

(87) Internationale Veröffentlichungsnummer:
**WO 2007/031485 (22.03.2007 Gazette 2007/12)**

(54) **PHYTASEHALTIGES ENZYMGRANULAT II**

PHYTASE-CONTAINING ENZYME GRANULATE II

GRANULE ENZYMATIQUE II CONTENANT DE LA PHYTASE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.09.2005 DE 102005043324**

(43) Veröffentlichungstag der Anmeldung:
**11.06.2008 Patentblatt 2008/24**

(73) Patentinhaber: **BASF SE**
**67056 Ludwigshafen (DE)**

(72) Erfinder:
• **LOHSCHEIDT, Markus**
**69121 Heidelberg (DE)**

• **BETZ, Roland**
**67150 Niederkirchen (DE)**
• **BRAUN, Jörg**
**76879 Essingen (DE)**

(56) Entgegenhaltungen:
**EP-A- 1 457 560        EP-A- 1 508 281**
**EP-A- 1 645 195        WO-A-00/47060**
**WO-A-2005/074707      WO-A2-01/83727**
**WO-A2-2004/108911     DE-A1-102004 008 020**
**US-A1- 2003 054 511**

**Beschreibung**

Die vorliegende Erfindung betrifft neue phytasehaltige Enzymgranulate, die als Futtermittelzusätze geeignet sind. Die Erfindung betrifft auch die Verwendung der phytasehaltigen Enzymgranulate in Futtermittelzusammensetzungen und insbesondere pelletierten Futtermittelzusammensetzungen, welche unter Verwendung der phytasehaltigen Enzymgranulate erhältlich sind.

Es ist allgemein üblich, dem Tierfutter Phytase zuzugeben, um eine bessere Futterverwertung, eine bessere Produktqualität oder eine geringere Belastung der Umwelt zu gewährleisten. Außerdem ist es gängige Praxis, Tierfutter in pelletierter Form zu verfüttern, da eine Pelletierung nicht nur die Futteraufnahme erleichtert, sondern auch die Handhabung des Futters verbessert. Darüber hinaus hat sich gezeigt, dass im Falle pelletierten Futters bestimmte Futterbestandteile besser verdaut werden und dem Futter zugesetzte Inhaltsstoffe, wie z. B. Vitamine, Enzyme, Spurenelemente, in der Futtermischung besser eingeschlossen werden können.

Zur Senkung der Keimbelastung (Hygienisierung) solcher Tierfutter wird häufig eine Hitzebehandlung durchgeführt. Eine Hitzebehandlung erfolgt auch im Rahmen des für die Pelletierung erforderlichen Konditionierens, bei dem das Futter mit Dampf versetzt und dadurch erhitzt und befeuchtet wird. Beim eigentlichen Pelletierschritt wird das Futter durch eine Matrize gepresst. Andere in der Futtermittelindustrie zum Einsatz kommende Prozesse sind das Extrudieren und Expandieren. Die Hitzeeinwirkung bei all diesen Prozessen stellt ein Problem dar, da die in solchen Futtermischungen enthaltenen Enzyme wie Phytase in der Regel thermisch instabil sind. Es wurden daher verschiedene Anstrengungen unternommen, die thermische Stabilität und insbesondere die Pelletierstabilität enzymhaltiger Futtermittelzusammensetzungen zu verbessern.

Hinsichtlich einer hohen Pelletierstabilität ist es grundsätzlich von Vorteil, Enzymgranulate mit vergleichsweise großen Granulatteilchen herzustellen, da in diesen die spezifische Oberfläche im Vergleich zu kleineren Teilchen geringer ist. Bei hoher spezifischer Enzymaktivität, z.B. bei Phytaseaktivitäten oberhalb 10000 FTU/g nimmt die Dosiergenauigkeit bei großen Teilchen naturgemäß ab, da eine gleichmäßige Verteilung des Granulats im Futter bei einer vorzugsweise anzustrebenden Aktivität im Futter von etwa 500 FTU/kg schwierig zu erreichen ist. Die Folge sind starke Schwankungen der Enzymaktivität in der Tagesration der Tiere.

Andererseits sind hohe spezifische Phytaseaktivitäten von wenigstens 7000 FTU/g oder gar wenigstens 13000 FTU/g zur Verringerung der Herstellungskosten (bezogen auf Aktivität) und zur Reduktion des aktivitätsspezifischen Produktvolumens wünschenswert.

Die WO 98/54980 beschreibt enzymhaltige Granulate mit verbesserter Pelletierstabilität, welche durch Extrusion einer wässrigen Enzymlösung mit einem Träger auf Basis eines essbaren Kohlenhydrats und anschließenden Trocknens hergestellt werden. Die Phytaseaktivität der Granulate liegt im Bereich von 5000 bis 10000 FTU/g.

Die WO 2000/47060 beschreibt phytasehaltige Enzymgranulate, die als Futtermittelzusätze geeignet sind und die eine Polyethylenglykolbeschichtung aufweisen. Die spezifische Phytaseaktivität in diesen Teilchen liegt im Bereich von 4000 bis 20000 FTU/g. Ein Zusammenhang zwischen Teilchengröße und Phytaseaktivität wird nicht gelehrt. Ähnliche Produkte sind aus WO 03/059086 bekannt, die sich von denen der WO 2000/47060 durch eine Beschichtung mit einer hydrophoben Substanz anstelle des Polyethylenglykol-Coatings unterscheiden.

In WO 2001/25412 wird gelehrt, dass dicke Coatingschichten bei Enzymgranulaten (Durchmesser Gesamtpartikel zu Durchmesser Enzymkern > 1,1) zur Reduktion der Staubneigung des Produktes sowie zur Erhöhung der Lagerstabilität beitragen. Diese dicken Schichten führen naturgemäß zu einer Vergrößerung des Enzymgranulats. Phytasehaltige Granulate werden nicht gelehrt.

Die WO 2004/108911 beschreibt Enzymgranulate mit hoher spezifischer Enzymaktivität, insbesondere mit einem hohen Verhältnis von aktivem zu inaktiviertem Enzym, und einem geringen Staubanteil. Die spezifische Phytaseaktivität liegt bei wenigstens 15000 FTU/g. Die dort beschriebenen Granulate sind bezüglich ihrer Dosierungsgenauigkeit nicht zufriedenstellend.

WO 2005/074707 beschreibt stabilisierte, flüssige oder feste Enzymformulierungen, beispielsweise Granulate, die wenigstens eine Phosphatase, beispielsweise Phytase, wenigstens eine stabilisierend wirkende Substanz aus der Gruppe Agar, Algin, Carrageen, Furcellaran, Ghattigummi, Tragantgummi, Karya Gummi, Guaran, Johannisbrotkernmehl, Tamarindensamen-Gummi, Arabinogalactan und Xanthan Gummi, sowie wenigstens ein tierisches Protein enthalten.

EP 1645195 beschreibt stabilisierte, flüssige oder feste Enzymformulierungen, beispielsweise Granulate, die wenigstens ein Enzym, beispielsweise eine Phytase und wenigstens eine stabilisierend wirkende Substanz enthält, die aus der Gruppe bestehend aus N-Alkyl-trialkyl/arylammoniumnsalzen der Formel I,

$$[(R_1)_3\text{-}N^+\text{-}(C_nH_{2n+1})]X^- \qquad (I)$$

worin X für Cl, Br oder I steht, $R_1$ unabhängig voneinander unter Methyl, Ethyl, Propyl, i-Propyl, Butyl, Phenyl oder Benzyl ausgewählt sind und n für eine Zahl von 1 bis 22 steht;

Aminoxid-Emulgatoren der Formel II

$$CH_3\text{-}(CH_2)_m\text{-}N(CH_3)_2\text{-}O \qquad (II)$$

worin M für 5 bis 21 steht,
und N-Dodecyl-N,N-dimethyl-3-ammonium-1-propansulfonat ausgewählt sind.

EP 1508281 beschreibt polymerbeschichtete, granulierte Futtermittelzusammensetzungen sowie Verfahren zu deren Herstellung, die auf diese Weise erhältlichen polymerbeschichteten Futtermittelzusammensetzungen sowie pelletierte Futtermittelzusammensetzungen, welche unter Verwendung der polymerbeschichteten Zusammensetzungen hergestellt werden.

EP 1457560 beschreibt ein Verfahren zur Herstellung wässriger, Phytase-haltiger Flüssigkeiten mit einer spezifischen Phytaseaktivität von wenigstens 14000 FTU/g.

US 2003/0054511 beschreibt ein Verfahren zur Herstellung enzymhaltiger Granulate, welche zur Herstellung von Tierfutter geeignet sind, welches die folgenden Schritte umfasst:

a) Vermischen eines Enzymfeeds, eines festen Trägermaterials, Wasser und wenigstens eines Additivs in wirksamer Menge;
b) mechanische Verarbeitung der Mischung aus Schritt a) gleichzeitig oder im Anschluss an den Mischvorgang, wobei man enzymhaltige Granulate erhält;
c) Trocknen der Granulate und
d) Beschichten der getrockneten Granulate mit Polyethylenglykol.

WO 01/83727 beschreibt ein Verfahren zur kontinuierlichen Herstellung von Enzymgranulaten, umfassend die folgenden Schritte:

a) Herstellung einer flüssigen Enzymzusammensetzung, enthaltend ein oder mehrere Enzyme;
b) gegebenenfalls Zugabe von Additiven zu der Enzymzusammensetzung aus Schritt a);
c) Versprühen einer oder mehrerer Enzymzusammensetzungen aus den Schritten a) und b) mittels Sprühdüsen in einer Wirbelschicht;
d) Abtrennen von Feingut, welches im Abgas ausgetragen wird und Rückführen des feinteiligen Materials in die Wirbelschicht als Keime für die Granulatbildung;
e) Ausbildung von Granulatteilchen mit vorbestimmter Größe durch Einstellung des Sichtgasstroms;
f) Austragen der Granulatteilen mittels einer oder mehrerer Gegenstrom-Schwerkraftsichter, die in dem Anströmboden der Wirbelschicht-Vorrichtung angeordnet sind; und
g) gegebenenfalls Beschichten des in Schritt f) erhaltenen Granulatteilchen.

Aufgabe ist deshalb die Bereitstellung von phytasehaltigen Enzymgranulaten mit verbesserter Dosiergenauigkeit bei gleichzeitig spezifischer Phytaseaktivität von 7000 bis 13000 FTU/g. Die Granulate sollten zudem eine hohe Pelletierstabilität aufweisen und in einfacher Weise und kostengünstig herstellbar sein. Zudem sollte es bereits bei der Herstellung nicht zu Verlusten an Enzymaktivität kommen.

Es wurde gefunden, dass phytasehaltige Enzymgranulate mit einer spezifischen Phytaseaktivität von wenigstens 7000 FTU/g, vorzugsweise wenigstens 7500 FTU/g, insbesondere wenigstens 8000 FTU/g, z.B. 7000 bis 13000 FTU/g, oder 7500 bis 13000 FTU/g oder 8000 bis 13000 FTU/g eine besonders gute Dosierbarkeit aufweisen, wenn die mittlere Teilchengröße (Gewichtsmittel) der Granulatteilchen im Bereich von 350 bis 550 $\mu$m und speziell im Bereich von 400 bis 550 $\mu$m liegt und die spezifische Phytaseaktivität des Granulats, ausgedrückt in FTU-Einheiten pro Gramm, einen Wert von 2000 $[FTU\ g^{-1}]\cdot D^{-3}\cdot mm^3$, besonders bevorzugt 1500 $[FTU\ g^{-1}]\cdot D^{-3}\cdot mm^3$ nicht überschreitet.

Die Erfindung betrifft ein phytasehaltiges Enzymgranulat für Futtermittel, dessen Teilchen eine gewichtsmittlere Teilchengröße im Bereich von 350 bis 550 $\mu$m aufweisen und dessen spezifische Phytaseaktivität, ausgedrückt in FTU/g, mindestens 7000 beträgt und einen Wert von

$$FTU_{max} = 2000\ [FTU\ g^{-1}]\cdot D^{-3}\cdot mm^3$$

nicht überschreitet, wobei D für den gewichtsmittleren Teilchendurchmesser der Granulat-Teilchen in mm steht.

Die spezifische Phytaseaktivität derartiger erfindungsgemäßer Enzymgranulate beträgt vorzugsweise wenigstens 7500 FTU/g, insbesondere wenigstens 8000 FTU/g.

Vorzugsweise wird die spezifische Phytaseaktivität einen Wert von

$$FTU_{max} = 1500\ [FTU\ g^{-1}] \cdot D^{-3} \cdot mm^3,$$

insbesondere von 1000 [FTU $g^{-1}$]·$D^{-3}$·$mm^3$ nicht überschreiten.

1 FTU Phytaseaktivität ist dabei definiert als die Menge an Enzym, die 1 Mikromol anorganisches Phosphat pro Minute aus 0.0051 mol/l wässrigem Natrium-Phytat bei pH 5,5 und 37°C freisetzt. Die Bestimmung der Phytaseaktivität kann beispielsweise gemäß "Determination of Phytase Activity in Feed by a Colorimetric Enzymatic Method": Collaborative Interlaboratory Study Engelen et al.: Journal of AOAC International Vol. 84, No. 3, 2001, oder auch Simple and Rapid Determination of Phytase Activity, Engelen et al., Journal of AOAC International, Vol. 77, No. 3, 1994 durchgeführt werden.

Der gewichtsmittlere Teilchendurchmesser der Granulatteilchen liegt speziell im Bereich von 400 bis 550 $\mu$m. Die mittlere Teilchengrößenverteilung kann in an sich bekannter Weise durch Lichtstreuung, z.B. mit einem Mastersizer S, der Fa. Malvern Instruments GmbH oder durch Siebanalyse, z.B. mit einer Siebmaschine Typ Vibro VS 10000 der Fa. Retsch bestimmt werden. Unter der mittleren Teilchengröße versteht der Fachmann den sog. $D_{50}$-Wert der Teilchengrößenverteilungskurve, d.h. den Wert, den 50 Gew.-% aller Teilchen über- bzw. unterschreiten.

Vorzugsweise weisen die Teilchen nur einen geringen Anteil an feinteiligen Teilchen auf. Dementsprechend weisen wenigstens 90 Gew.-% der Teilchen einen Teilchendurchmesser von mehr als 100 $\mu$m, insbesondere mehr als 150 $\mu$m und speziell mehr als 200 $\mu$m auf und nicht mehr als 10 Gew.-% einen Durchmesser unterhalb dieser Grenzen ($D_{10}$-Wert). Vorzugsweise beträgt der Gewichtsanteil der Teilchen mit einem Teilchendurchmesser unterhalb 100 $\mu$m weniger als 8 Gew.-%, insbesondere weniger als 5 Gew.-% und speziell weniger als 1 Gew.-%.

Vorzugsweise weisen die Teilchen des Granulats nur einen geringen Anteil an grobteiligen Teilchen auf. Dementsprechend weisen wenigstens 90 Gew.-% der Teilchen einen Teilchendurchmesser von nicht mehr als 1200 $\mu$m, insbesondere nicht mehr als 1000 $\mu$m und speziell nicht mehr als 800 $\mu$m auf und nicht mehr als 10 Gew.-% einen Durchmesser oberhalb dieser Grenzen ($D_{10}$-Wert). Vorzugsweise beträgt der Gewichtsanteil der Teilchen mit einem Teilchendurchmesser 1200 $\mu$m, insbesondere oberhalb 1000 $\mu$m weniger 8 Gew.-%, insbesondere weniger als 5 Gew.-% und speziell weniger als 1 Gew.-%.

Vorzugsweise ist die Teilchengrößenverteilung eng, d.h. die Abweichung vom Gewichtsmittleren Durchmesser ist gering. In bevorzugten Granulaten ist daher die Teilchengrößenverteilung durch einen Wert $D_{90}/D_{10} < 3,5$, insbesondere < 3, besonders bevorzugt < 2 und speziell < 1,8 charakterisiert.

Die Teilchen des Granulats können grundsätzlich eine unregelmäßige Geometrie aufweisen, wobei Teilchen mit einer regelmäßigen, d.h. zylindrischen oder kugelförmigen Geometrie bevorzugt sind. Insbesondere hat es sich als günstig erwiesen, wenn die Granulatteilchen einen Rundheitsfaktor < 2, insbesondere < 1,8 und speziell < 1,6 aufweisen. Der Rundheitsfaktor entspricht dem Verhältnis der mittleren Oberfläche der Granulatteilchen zur Oberfläche einer Kugel, die den gewichtsmittleren Durchmesser der Granulatteilchen aufweist.

In einer ersten bevorzugten Ausführungsform weisen die Granulatteilchen eine kugelförmige oder ellipsoide Geometrie auf, wobei das Verhältnis von größtem zu kleinstem Durchmesser vorzugsweise einen Wert von 3:1, insbesondere von 1,5:1 und speziell 1,3:1 nicht überschreiten wird. In einer gleichermaßen bevorzugten Ausführungsform ist die Geometrie der Granulatteilchen zylinderförmig, wobei das Verhältnis von Durchmesser zu Länge vorzugsweise im Bereich von 1:1,3 bis 1:3 liegt. Die zylinderförmigen Granulatteilchen weisen vorzugsweise gerundete Enden auf.

Die erfindungsgemäßen Granulate können unbeschichtet sein, oder die Granulatteilchen weisen eine Beschichtung auf, d.h. die Granulatteilchen umfassen einen Enzymhaltigen Kern A und eine auf dem Kern angeordnete Beschichtung B.

Die erfindungsgemäßen Granulatteilchen enthalten neben der Phytase vorzugsweise wenigstens ein festes, für Futtermittel geeignetes Trägermaterial. In beschichteten Granulaten ist das Trägermaterial typischerweise Bestandteil des Kerns. Das Trägermaterial macht typischerweise wenigstens 50 Gew.-%, insbesondere wenigstens 55 Gew.-% und häufig wenigstens 60 Gew.-% der nichtwässrigen Bestandteile des unbeschichteten Granulats bzw. des Kern aus, z.B. 50 bis 96,9 Gew.-%, vorzugsweise 55 bis 94,8 Gew.-% und insbesondere 60 bis 89,7 Gew.-%.

Als futtermitteltaugliche Trägermaterialien können übliche inerte anorganische oder organische Träger verwendet werden. Ein "inerter" Träger darf keine negativen Wechselwirkungen mit dem (den) Enzym(en) des erfindungsgemäßen Futterzusatzes zeigen, wie z. B. eine irreversible Inhibierung der Enzymaktivität bewirken, und muss für die Verwendung als Hilfsstoff in Futtermittelzusätzen unbedenklich sein. Als Beispiele für geeignete Trägermaterialien sind zu nennen: niedermolekulare organische Verbindungen sowie höher molekulare organische Verbindungen natürlichen oder synthetischen Ursprungs sowie inerte anorganische Salze. Bevorzugt sind organische Trägermaterialien. Hierunter sind Kohlenhydrate besonders bevorzugt.

Beispiele für geeignete niedermolekulare organische Träger sind insbesondere Zucker, wie z. B. Glucose, Fructose, Saccharose. Als Beispiele für höhermolekulare organische Träger sind Kohlenhydratpolymere zu nennen, insbesondere solche, die $\alpha$-D-Glucopyranose, Amylose oder Amylopectin-Einheiten enthalten, insbesondere native und modifizierte Stärken, mikrokristalline Cellulose aber auch α-Glucane und ß-Glucane, Pectin (einschließlich Protopectin) und Glycogen. Vorzugsweise umfasst das Trägermaterial wenigstens ein in Wasser unlösliches polymeres Kohlenhydrat, insbesondere ein natives Stärkematerial, wie insbesondere Maisstärke, Reisstärke, Weizenstärke, Kartoffelstärke, Stärken anderer pflanzlicher Quellen wie Stärke aus Tapioka, Cassava, Sago, Roggen, Hafer, Gerste, Süßkarfoffel, Pfeilwurz und dergleichen, weiterhin Getreidemehle, wie z. B. Mais-, Weizen-, Roggen-, Gersten- und Hafermehl sowie Reismehl. Geeignet sind insbesondere auch Gemische der vorgenannten Trägermaterialien, insbesondere Gemische, die überwiegend, d.h. zu wenigstens 50 Gew.-%, bezogen auf das Trägermaterial, ein oder mehrere Stärkematerialien.umfassen. Vorzugsweise macht dass wasserunlösliche Kohlenhydrat wenigstens 50 Gew.-%, insbesondere wenigstens 65 Gew.-% und speziell wenigstens 80 Gew.-% des Trägermaterials aus. Besonders bevorzugte Trägermaterialien sind Stärken, die nicht mehr als 5 Gew.-% und insbesondere nicht mehr als 2 Gew.-% Protein oder andere Bestandteile enthalten. Ein weiteres bevorzugtes Trägermaterial ist mikrokristalline Cellulose. Diese kann alleine oder in Mischung mit den zuvor genannten Trägermaterialen eingesetzt werden. Sofern die mikrokristalline Cellulose im Gemisch mit anderen Trägermaterialien eingesetzt wird, macht sie vorzugsweise nicht mehr als 50 Gew.-%, insbesondere nicht mehr als 30 Gew.-%, z.B. 1 bis 50 Gew.-%, insbesondere 1 bis 30 Gew.-% und speziell 1 bis 10 Gew.-% des Trägermaterials aus.

Als anorganische Trägermaterialien kommen grundsätzlich alle für Futtermittel und Futtermittelzusätze bekannten anorganischen Trägermaterialien in Betracht, beispielsweise inerte anorganische Salze z.B. Sulfate oder Carbonate der Alkali- und Erdalkalimetalle wie Natrium-, Magnesium-, Calcium- und Kaliumsulfat oder -carbonat, weiterhin futtermittelverträgliche Silikate wie Talk und Kieselsäuren. Die Menge an anorganischem Trägermaterial, bezogen auf die Gesamtmenge an Trägermaterial, wird in der Regel 50 Gew.-%, besonders 35 Gew.-% und ganz besonders 20 Gew.-% nicht überschreiten. In einer bevorzugten Ausführungsform machen die organischen Trägermaterialien die Gesamtmenge oder nahezu die Gesamtmenge, d.h. wenigstens 95 Gew.-% des Trägermaterials aus.

Weiterhin enthält das Granulat wenigstens eine Phytase, wobei auch Mischungen verschiedener Phytasen oder Mischungen von Phytase mit ein oder mehreren anderen Enzymen vorliegen können. Typische Enzyme für Futtermittel sind neben Phytase z.B. Oxidoreduktasen, Transferasen, Lyasen, Isomerasen, Ligasen, Lipasen und von Phytase verschiedene Hydrolasen. In beschichteten Granulaten ist die Phytase typischerweise Bestandteil des Kerns. Typische Enzyme für Futtermittel sind neben Phytase z.B. Oxidoreduktasen, Transferasen, Lyasen, Isomerasen, Ligasen, Lipasen und insbesondere von Phytase verschiedene Hydrolasen. Beispiele für Hydrolasen, d. h. Enzyme, welche eine hydrolytische Spaltung von chemischen Bindungen bewirken, sind Esterasen, Glycosidasen, Keratinasen, Etherhydrolasen, Proteasen, Amidasen, Aminidasen, Nitrilasen und Phosphatasen. Glycosidasen (EC 3.2.1, auch als Carbohydrasen bezeichnet) umfassen sowohl Endo- als auch Exo-Glycosidasen, die sowohl α- als auch ß-glycosidische Bindungen spalten. Typische Beispiele hierfür sind Amylasen, Maltasen, Zellulasen, Endo-Xylanasen, z.B. endo-1,4-ß-Xylanase oder Xylan-endo-1,3-ß-xylosidase, ß-Glucanasen, insbesondere endo-1,4-ß- und endo-1,3-ß-Glucanasen, Mannanasen, Lysozyme, Galaktosidasen, Pectinasen, ß-Glucuronidasen und dergleichen.

Der Ausdruck "Phytase" umfasst sowohl natürliche Phytase als auch jedes andere Enzym, das Phytaseaktivität zeigt, beispielsweise in der Lage ist, eine Reaktion zu katalysieren, durch die Phosphor bzw. Phosphat aus myo-Inositolphosphaten freigesetzt wird. Bei der Phytase kann es sich sowohl um eine 3-Phytase (EC 3.1.3.8) als auch um eine 4- oder 6-Phytase (EC 3.1.3.26) oder um eine 5-Phytase (EC 3.1.3.72) oder um eine Mischung davon handeln. Vorzugsweise gehört die Phytase der Enzymklasse EC 3.1.3.8 an.

Die erfindungsgemäß eingesetzte Phytase unterliegt keinen Beschränkungen und kann sowohl mikrobiologischen Ursprungs sein als auch eine durch genetische Modifizierung einer natürlich vorkommenden Phytase oder eine durch de-novo Konstruktion erhaltene Phytase sein. Bei der Phytase kann es sich um eine Phytase aus Pflanzen, aus Pilzen, aus Bakterien oder um eine von Hefen produzierte Phytase handeln. Bevorzugt sind Phytasen aus mikrobiologischen Quellen wie Bakterien, Hefen oder Pilzen. Sie können jedoch auch pflanzlichen Ursprungs sein. In einer bevorzugten Ausführungsform handelt es sich um eine Phytase aus einem Pilzstamm, insbesondere aus einem Aspergillus-Stamm, z.B. Aspergillus niger, Aspergillus oryzae, Aspergillus ficuum, Aspergillus awamori, Aspergillus fumigatus, Aspergillus nidulans oder Aspergillus terreus. Besonders bevorzugt sind Phytasen, die aus einem Stamm von Aspergillus niger oder einem Stamm von Aspergillus oryzae abgeleitet sind. In einer anderen bevorzugten Ausführungsform ist die Phytase von einem Bakterienstamm, insbesondere einem Bacillus-Stamm, einem E. coli-Stamm oder einem Pseudomonas-Stamm abgeleitet, wobei hierunter Phytasen bevorzugt sind, die von einem Bacillus-Subtilis-Stamm abgeleitet sind. In einer anderen bevorzugten Ausführungsform ist die Phytase von einer Hefe, insbesondere einem Kluveromyces Stamm oder einem Saccharomyces-Stamm abgeleitet, wobei hierunter Phytasen bevorzugt sind, die von einem Stamm der Saccharomyces cerevisiae abgeleitet sind. In dieser Erfindung umfasst der Ausdruck "ein von Phytase abgeleitetes Enzym" die von dem jeweiligen Stamm natürlich produzierte Phytase, die entweder aus dem Stamm gewonnen wird oder die durch eine aus dem Stamm isolierte DNA Sequenz kodiert wird und durch einen Wirtsorganismus, der mit dieser DNA-Sequenz transformiert wurde, produziert wird. Die Phytase kann aus dem jeweiligen Mikroorganismus nach bekannten Techniken gewonnen werden, die typischerweise die Fermentation des Phytase-produzierenden Mikroorganismus in einem geeigneten Nährmedium (siehe z.B. ATCC-Katalog) und die anschließende Gewinnung der Phytase aus dem Fermentationsmedium nach Standardtechniken umfasst. Beispiele für Phytasen sowie für Verfahren zur Herstellung und Isolierung von Phytasen findet man in EP-A 420358, EP-A 684313, EP-A 897010, EP-A 897985, EP-A 10420358, WO 94/03072, WO 98/54980, WO 98/55599, WO 99/49022, WO 00/43503, WO 03/102174, auf deren Offenbarung hiermit ausdrücklich Bezug genommen wird.

Die Menge an Phytase in dem Granulat richtet sich naturgemäß nach der gewünschten Aktivität des Enzymgranulats und der Aktivität des eingesetzten Enzyms und liegt typischerweise im Bereich von 3 bis 49,9 Gew.-%, insbesondere im Bereich von 5 bis 44,8 Gew.-% und speziell im Bereich von 10 bis 39,7 Gew.-%, gerechnet als Trockenmasse und bezogen auf das Gesamtgewicht aller nichtwässrigen Bestandteile des unbeschichteten Granulats, bzw. des Kerns.

In einer bevorzugten Ausführungsform umfassen die Bestandteile des unbeschichteten Granulats bzw. des Kerns neben dem futtermitteltauglichen Trägermaterial wenigstens ein in Wasser lösliches Polymer. Dieses Polymer wirkt als Bindemittel und erhöht zugleich die Pelletierstabilität. Bevorzugte wasserlösliche Polymere weisen ein zahlenmittleres Molekulargewicht im Bereich von $5 \times 10^3$ bis $5 \times 10^6$ Dalton, insbesondere im Bereich von $1 \times 10^4$ bis $1 \times 10^6$ Dalton auf. Die Polymere gelten als wasserlöslich, wenn sich wenigstens 3 g Polymer in 1 Liter Wasser vollständig lösen lassen.

Zu den erfindungsgemäß eingesetzten wasserlöslichen Polymeren zählen

- Polysaccharide, z.B. wasserlösliche modifizierte Stärken mit in der Regel klebenden Eigenschaften, beispielsweise Stärkeabbauprodukte (Dextrine) wie Säuredextrine, Röstdextrine, enzymatische partial-Hydrolysate (Grenzdextrine), oxidativ abgebaute Stärken und deren Umsetzungsprodukte von Dextrinen mit kationischen oder anionischen Polymeren, Umsetzungsprodukte von Dextrinen mit Octenylsuccinatanhydrid (OSA), Stärkeleim, weiterhin Chitin, Chitosan, Carrageen, Alginate, Arabinsäure-Salze, Gummen, z.B. Gummi arabicum, Tragant, Karaya Gummi; Xanthan-Gum und Gellan-Gum; Galactomannane; wasserlösliche Cellulosederivate, z.B. Methylcellulose, Ethylcellulose und Hydroxyalkylcellulosen wie z.B. Hydroxyethylcellulose (HEC), Hydroxyethylmethylcellulose (HEMC), Ethylhydroxyethylcellulose (EHEC), Hydroxypropylcellulose (HPC), Hydroxypropylmethylcellulose (HPMC) und Hydroxybutylcellulose, sowie Carboxymethylcellulose (CMC);
- wasserlösliche Proteine, z.B. Proteine tierischen Ursprungs wie Gelatine, Casein, insbesondere Natriumcaseinat und pflanzliche Proteine, wie Sojaprotein, Erbsenprotein, Bohnenprotein, Rapsprotein, Sonnenblumenprotein, Baumwollsamenprotein, Kartoffelprotein, Lupin, Zein, Weizenprotein, Maisprotein und Reisprotein,
- synthetische Polymere, z.B. Polyethylenglykol, Polyvinylalkohol und insbesondere die Kollidon-Marken der Fa. BASF, Vinylalkohol-Vinylester-Copolymere, Homo- und Copolymere des Vinylpyrrolidons mit Vinylacetat und/oder $C_1$-$C_4$-Alkylacrylaten,
- und gegebenenfalls modifizierte Biopolymere, z.B. Lignin, Polylactid.

Bevorzugte wasserlösliche Polymere sind neutral, d.h. sie weisen keine sauren oder basischen Gruppen auf. Hierunter sind Polyvinylalkohole, einschließlich teilweise verseifter Polyvinylacetate mit einem Verseifungsgrad von wenigstens 80 %, sowie insbesondere wasserlösliche, neutrale Cellulsoseether wie Methylcellulose, Ethylcellulose und Hydroxyalkylcellulosen wie z.B. Hydroxyethylcellulose (HEC), Hydroxyethylmethylcellulose (HEMC), Ethylhydroxyethylcellulose (EHEC), Hydroxypropylcellulose (HPC), Hydroxypropylmethylcellulose (HPMC) und Hydroxybutylcellulose besonders bevorzugt.

In einer bevorzugten Ausführungsform der Erfindung ist das wasserlösliche Polymer unter neutralen Celluloseethern ausgewählt. Beispiele für erfindungsgemäß bevorzugte wasserlösliche, neutrale Celluloseether sind Methylcellulose, Ethylcellulose und Hydroxyalkylcellulosen, z.B. Hydroxyethylcellulose (HEC), Hydroxyethylmethylcellulose (HEMC), Ethylhydroxyethylcellulose (EHEC), Hydroxypropylcellulose (HPC), Hydroxypropylmethylcellulose (HPMC) und Hydroxybutylcellulose. Hierunter sind Methylcellulose, Ethylcellulose und gemischte Celluloseether mit Methylgruppen oder Ethylgruppen und Hydroxyalkylgruppen wie HEMC, EHEC und HPMC besonders bevorzugt. Bevorzuge Methyl- oder Ethyl-substituierte Celluloseether weisen einen Substitutionsgrad DS (bezüglich der Alkylgruppen) im Bereich von 0,8 bis 2,2 auf und im Falle gemischter Celluloseether einen Substitutionsgrad DS bezüglich der Alkylgruppen im Bereich von 0,5 bis 2,0 und einen Substitutionsgrad HS bezüglich der Hydroxyalkylgruppen im Bereich von 0,02 bis 1,0 auf.

Der Anteil an wasserlöslichen Polymeren kann je nach Ausführungsform über weite Bereiche variiert werden. Im Falle von Enzymgranulaten mit einem Trägerbestandteil macht ihr Anteil an den nichtwässrigen Bestandteilen des unbeschichteten Enzymgranulats bzw. des Kerns vorzugsweise 0,1 bis 20 Gew.-%, insbesondere 0,2 bis 10 Gew.-% und speziell 0,3 bis 5 Gew.-% aus.

Weiterhin kann das den Kern bzw. das unbeschichtete Granulat bildende Material zusätzlich ein das Enzym stabilisierendes Salz enthalten. Bei den stabilisierend wirkenden Salzen handelt es sich typischerweise um Salze 2-wertiger Kationen, insbesondere um Salze des Calciums, Magnesiums oder des Zinks, sowie um Salze einwertiger Kationen, insbesondere des Natriums oder des Kaliums, beispielsweise die Sulfate, Carbonate, Hydrogencarbonate und die Phosphate einschließlich Hydrogenphosphaten und Ammoniumhydrogenphosphaten dieser Metalle. Bevorzugte Salze sind die Sulfate. Besonders bevorzugt sind Magnesiumsulfat und Zinksulfat, einschließlich deren Hydrate. Die Menge an Salz liegt vorzugsweise im Bereich von 0,1 bis 10 Gew.-%, insbesondere im Bereich von 0,2 bis 5 Gew.-%,

und speziell im Bereich von 0,3 bis 3 Gew.-%, bezogen auf das Gesamtgewicht aller nichtwässrigen Bestandteile des Kernmaterials bzw. des unbeschichteten Granulats.

Die erfindungsgemäßen Granulate weisen in der Regel einen Wassergehalt unterhalb 15 Gew.-%, häufig im Bereich von 1 bis 12 Gew.%, insbesondere im Bereich von 3 bis 10 Gew.-% und speziell im Bereich von 5 bis 9 Gew.-%, bezogen auf das Gewicht des enzymhaltigen Granulats, auf. Gemäß einer bevorzugten Ausführungsform der Erfindung umfassen die Granulatteilchen des Enzymgranulats

a) einen Kern, welcher wenigstens eine Phytase und wenigstens ein für Futtermittel geeignetes festes Trägermaterial umfasst, und

b) eine auf dem Kern angeordnete Beschichtung.

Im Hinblick auf die Pelletierstabilität hat es sich als vorteilhaft erwiesen, wenn das unbeschichtete Granulat, bzw. die Kerne des beschichteten Granulats oder das gesamte Teilchen nach ggf. erforderlicher Zermahlung beim Suspendieren oder Lösen in voll entsalztem Wasser bei 25°C einen pH-Wert im Bereich von 4,5 bis 6,5, bevorzugt 4,6 bis 6 und besonders bevorzugt von 4,7 bis 5,5 ergeben. In der Regel wird man zur Bestimmung des pH-Wertes 5 g der unbeschichteten Kerne oder beschichteten Kerne bei 25°C in 200 ml entionisiertem Wasser lösen und den sich nach 30 min. einstellenden pH-Wert mit einer Glaselektrode bzw. mit einem pH-Wert-Messgerät bestimmen.

Dementsprechend umfassen gemäß einer bevorzugten Ausführungsform der Erfindung die den Kern bzw. das unbeschichtete Granulat bildenden Bestandteile neben der Phytase sowie den gegebenenfalls vorhandenen weiteren Bestandteilen wie festes Trägermaterial und Bindemittel wenigstens ein Mittel zur Einstellung eines pH-Wertes von 4,5 bis 6,5, bevorzugt 4,6 bis 6 und besonders bevorzugt von 4,7 bis 5,5 beispielsweise einen Puffer oder eine Base, letztere insbesondere dann, wenn die den Kern bildenden Materialien ihrerseits Säuregruppen aufweisen.

Geeignete Substanzen zur Einstellung des pH-Wertes sind dem Fachmann hinlänglich bekannt, beispielsweise aus Küster-Thiel, Rechentafeln für die chemische Analytik, 102. Auflage, 1982, Walter deGruyter-Verlag und Handbook of Chemistry and Physics, 76 th ed. 1995-1996, CRS Press 8-38 ff.; DIN Normenheft 22, Richtlinien für die pH-Messung in industriellen Anlagen, Berlin: Beuth 1974; DIN 19266 (Aug. 1979); DIN 19267 (Aug. 1978); Naturwissenschaften 65, 438f. (1978). Kontakte (Merck) 1981, Nr. 1, 37-43.

Beispiele für geeignete Puffer sind Acetat, Propionat, Tartrat, Hydrogencarbonat, Phthalat, Hydrogenphthalat, insbesondere die Natrium-, Kalium- oder Calciumsalze, der vorgenannten Substanzen, einschließlich deren Hydrate oder Dihydrate, Phosphatpuffer, Kalium- oder Natriumphosphat, deren Hydrate oder Dihydrate, Natrium- oder Kaliumcarbonat. Beispiele für geeignete Basen sind Natrium- oder Kaliumcarbonat, Natrium-, Kalium-, Calcium-, Magnesium-, Ammoniumhydroxid bzw. Ammoniakwasser oder deren Oxide.

Die Menge an Puffer bzw. Base liegt typischerweise im Bereich von 0,1 bis 5 Gew.-%, bezogen auf das Gesamtgewicht der den Kern bzw. das unbeschichtete Granulat bildenden, nichtwässrigen Bestandteile. Grundsätzlich muss keine Zugabe des Puffers erfolgen, wenn die Bestandteile des Kernmaterials in der im Kern vorliegenden Zusammensetzung bereits einen solchen pH-Wert ergeben. Insbesondere hat sich ein Granulat bewährt, das durch ein Verfahren erhältlich ist, bei dem man für die Herstellung des Granulats ein wässriges Enzymkonzentrat einsetzt, das bei 25°C einen pH-Wert im Bereich von 4,5 bis 6,5, bevorzugt 4,6 bis 6 und besonders bevorzugt von 4,7 bis 5,5 aufweist. Dabei wird der pH-Wert des Enzymkonzentrats direkt mit einer Glaselektrode bzw. mit einem pH-Wert-Messgerät bestimmt.

Sofern die Teilchen der erfindungsgemäßen Enzymgranulate wenigstens eine auf dem Kern der Teilchen angeordnete Beschichtung aufweisen, bedeckt diese die Oberfläche der Kerne vorzugsweise zu wenigstens 80 % (Mittelwert) und insbesondere vollständig.

Das Gewichtsverhältnis von Kern zu Beschichtung liegt in vorzugsweise im Bereich von 70:30 bis 99:1, vorzugsweise im Bereich von 75:25 bis 98:2, insbesondere im Bereich von 80:20 bis 96:4 und speziell im Bereich von 85:15 bis 95:5, wobei in einigen Fällen auch höhere Beschichtungsanteile von Vorteil sein können, z.B. bei Salzbeschichtungen.

Typischerweise entsprechen die Teilchengrößen der erfindungsgemäßen, beschichteten Enzymgranulate denen der unbeschichteten Granulate bzw. der Kerne, die im Folgenden auch als Rohgranulate bezeichnet werden. Mit anderen Worten, in beschichteten Granulaten wird das Verhältnis von mittlerem Teilchendurchmesser des beschichten Granulats zu dem mittleren Teilchendurchmesser des Rohgranulats in der Regel einen Wert von 1,1:1 und insbesondere einen Wert von 1,09:1 nicht überschreiten.

Geeignet sind grundsätzlich alle Arten von Beschichtungen, die aus dem Stand der Technik für Enzymgranulate bekannt sind. Bevorzugt sind hydrophobe Beschichtungen, d.h. Beschichtungen, deren Bestandteile nicht oder nur begrenzt in Wasser löslich sind. Dementsprechend betrifft eine erfindungsgemäß besonders bevorzugte Ausführungsform phytasehaltige Enzymgranulate, deren Teilchen eine Beschichtung aufweisen, die zu wenigstens 90 Gew.-% aus in Wasser unlöslichen hydrophoben Substanzen besteht.

Als hydrophobe Materialien kommen für die hydrophobe Beschichtung sowohl polymere Substanzen als auch oligomere oder niedermolekulare Substanzen in Betracht. Erfindungsgemäß weisen die hydrophoben Materialien einen hohen Kohlenwasserstoffanteil auf, wobei der Anteil an Kohlenstoff und Wasserstoff in der Regel wenigstens 80 Gew.-%, insbesondere wenigstens 85 Gew.-% des hydrophoben Materials ausmacht. Bevorzugt sind solche Substanzen, die einen Schmelzpunkt oberhalb 30 °C, vorzugsweise oberhalb 40 °C, insbesondere oberhalb 45 °C und speziell oberhalb 50 °C aufweisen, bzw. im Falle nicht schmelzender Substanzen bei diesen Temperaturen fest sind oder eine Glasübergangstemperatur oberhalb dieser Temperaturen aufweisen. Bevorzugt sind hydrophobe Materialien mit Schmelzpunkten im Bereich von 40 bis 95 °C, insbesondere im Bereich von 45 bis 80 °C, und besonders bevorzugt im Bereich von 50 bis 70 °C.

Bevorzugt ist das hydrophobe Material säurearm und weist eine Säurezahl unterhalb 80, insbesondere unterhalb 30 und speziell unterhalb 10 auf (bestimmt nach ISO 660).

Beispiele für erfindungsgemäß geeignete hydrophobe Materialien sind

- Polyolefine wie Polyethylen, Polypropylen und Polybutene;
- gesättigte Fettsäuren mit vorzugsweise 10 bis 32 C-Atomen, häufig 12 bis 24 C-Atomen und insbesondere 16 bis 22 C-Atomen;
- Ester gesättigter Fettsäuren, vorzugsweise Mono-, Di- und Triglyceride sowie Ester gesättigter Fettsäuren mit Fettalkoholen. Die Fettalkohole weisen beispielsweise 10 bis 32 C-Atome, insbesondere 16 bis 24 C-Atome auf, wie Cetylalkohol oder Stearylalkohol. Die Fettsäuren bzw. die Fettsäurereste in den Fettsäureestern weisen vorzugsweise 10 bis 32, häufig 12 bis 24 C-Atome und insbesondere 16 bis 22 C-Atome auf;
- Wachse, insbesondere pflanzliche Wachse und Wachse tierischen Ursprungs, aber auch Montanwachse und Montanesterwachse;
- Polyvinylacetate;
- $C_1$-$C_{10}$-Alkyl(meth)acrylat-Polymere und -Copolymere, vorzugsweise solche mit einem zahlenmittleren Molekulargewicht von etwa 100 000 bis 1 000 000; insbesondere Ethylacrylat/Methylmethacrylat-Copolymeren und Methylacrylat/Ethylacrylat-Copolymeren.

In einer bevorzugten Ausführungsform besteht das die Beschichtung bildende Material zu wenigstens 70 Gew.-%, besonders zu wenigstens 80 Gew.-%, insbesondere zu wenigstens 90 Gew.-% aus wenigstens einer, unter gesättigten Fettsäuren, Fettsäureestern und deren Mischungen ausgewählten Substanz (im Folgenden kurz als "Fette" bezeichnet), wobei Fettsäureester und insbesondere Triglyceride bevorzugt sind. Gesättigt bedeutet, dass das hydrophobe Material im Wesentlichen frei ist von ungesättigten Bestandteilen und dementsprechend eine Iodzahl unterhalb 5 und insbesondere unterhalb 2 aufweist (Methode nach Wijs, DIN 53 241).

Insbesondere bevorzugt besteht die Beschichtung zu wenigstens 70 Gew.-%, insbesondere wenigstens 80 Gew.-% und speziell wenigstens 90 Gew.-% aus den vorgenannten Triglyceriden.

In einer bevorzugten Ausführungsform der Erfindung enthält das Beschichtungsmittel überwiegend, d.h. zu wenigstens 70 Gew.-%, insbesondere wenigstens 80 Gew.-% und speziell über 90 Gew.-% hydrierte pflanzliche Öle, insbesondere Triglyceride pflanzlichen Ursprungs, z.B. hydrierte Baumwollsamen-, Mais-, Erdnuss-, Sojabohnen-, Palm-, Palmkern-, Babassu-, Raps-, Sonnenblumen- und Färberdistelöle. Hierunter besonders bevorzugte hydrierte pflanzliche Öle sind hydriertes Palmöl, Baumwollsamenöl und Sojabohnenöl. Das am meisten bevorzugte hydrierte pflanzliche Öl ist hydriertes Sojabohnenöl. In gleicher Weise sind auch andere von Pflanzen und Tieren stammende Fette und Wachse geeignet, beispielsweise Rindertalgfett. Geeignet sind auch naturidentische Fette und Wachse, d.h. synthetische Wachse und Fette mit einer Zusammensetzung, die der natürlicher Produkte überwiegend entspricht.

Die folgende Tabelle nennt einige Beispiele erfindungsgemäß geeigneter Beschichtungsmaterialien:

| Bezeichnung | Zusammensetzung | Schmelzbereich | CAS-Nr. / INCI |
|---|---|---|---|
| Cutina CP von Cognis | synthetisches Cetylpalmitat | 46 - 51 °C | 95912-87-1 Cetyl Palmitate |
| Edenor NHTI-G von Cognis | Triglycerid | 56 - 60 °C | 67701-27-3* |
| Edenor NHTI-V von Cognis | Triglycerid | 57 - 60 °C | 67701-27-3* EINECS 266-945-8 |
| Edenor C1892 von Cognis | Stearinsäure, C16 - 18 | 66 - 99 °C | |
| Edenor HPA von Cognis | Fettsäuren, Palmöl, hydriert, C16-18 | 55 - 57 °C | |
| Edenor HRAGW von Cognis | Fettsäuren, C 16 -22 | 64 - 66 °C | |
| Edenor C2285R von Cognis | Fettsäuren, C18 - 22 | 75 - 78°C | 68002-88-0* |

(fortgesetzt)

| Bezeichnung | Zusammensetzung | Schmelzbereich | CAS-Nr. / INCI |
|---|---|---|---|
| Rilanit von Cognis | Triglycerid | 83 - 90 °C | |
| Japanwachsersatz von Kahl - Wachsraffinerie | hauptsächlich Palmitinsäureglycerinester | 49 - 55 °C | rhus succedanea |
| Tefacid von Karlshamns | palm kernel oil Tefacid Palmic 90 | 65 °C | 57-10-3 |
| Soybean fat powder von Sankyu/Japan | | 65 - 70 °C | |

Geeignete Fette sind außerdem die unter der Handelsbezeichnung Vegeol PR vertriebenen Produkte der Fa. Aarhus Olie, DK, z.B. Vegeol® PR 267, PR 272, PR 273, PR 274, PR 275, PR 276, PR 277, PR 278 und PR 279.

Als Wachse sind insbesondere Wachse tierischen Ursprungs wie Bienenwachs und Wollwachs, Wachse pflanzlichen Ursprungs wie Candelillawachs, Carnaubawachs, Rohrzuckerwachs, Carandaywachs, Raffiawachs , Columbiawachs, Espartowachs, Alfalfawachs, Bambuswachs, Hempwachs, Douglasfichtenwachs, Korkwachs, Sisalwachs, Flaxwachs, Baumwollwachs, Dammarwachs, Getreidewachs, Reiswachs, Ocatillawachs, Oleanderwachs, Montanwachse, Montanesterwachse, Polyethylenwachse, außerdem die unter dem Handelsnamen Wükonil, Südranol, Lubranil oder Mikronil vertriebenen Produkte der Fa. Süddeutsche Emulsions-Chemie, oder die Produkte mit dem Handelsnamen Poligen WE1, WE3, WE4, WE6, WE7, WE8 BW, WE9 der BASF als Beschichtungsmaterial geeignet.

Geeignete hydrophobe Beschichtungsmaterialien sind außerdem die folgenden Polyolefine: Polyisopren, mittel- und hochmolekulares Polyisobuten und Polybutadien.

In bevorzugten Alkyl(meth)acrylat-Polymeren und -Copolymeren weist die Alkylgruppe 1 bis 4 Kohlenstoffatome auf. Als konkrete Beispiele für geeignete Copolymere sind zu nennen: Ethylacrylat/Methylmethacrylat-Copolymere, welche beispielsweise unter den Handelsnamen Kollicoat EMM 30D von der BASF AG oder unter dem Handelsnamen Eudragit NE 30 D von der Fa. Degussa vertrieben werden; sowie Methacrylat/Ethylacrylat-Copolymere, wie sie beispielsweise unter dem Handelsnamen Kollicoat MAE 30DP von der BASF AG oder unter dem Handelsnamen Eudragit 30/55 von der Fa. Degussa in Form einer wässrigen Dispersion vertrieben werden.

Als Beispiele für Polyvinylacetat-Dispersionen sind solche zu nennen, welche mit Polyvinylpyrolidon stabilisiert sind und beispielsweise unter der Handelsbezeichnung Kollicoat SR 30D von der BASF AG vertrieben werden (Feststoffgehalt der Dispersion etwa 20 bis 30 Gew.-%).

In einer anderen Ausführungsform der Erfindung umfasst die Beschichtung polymere Substanzen, die in Wasser eine zumindest begrenzte Löslichkeit aufweisen. Beispiele hierfür sind

a) Polyalkylenglykole, insbesondere Polyethylenglykole, vorzugsweise solche mit einem zahlenmittleren Molekulargewicht von etwa 400 bis 15 000, wie z. B. etwa 400 bis 10 000;

b) Polyalkylenoxid-Polymere oder -Copolymere, vorzugsweise solche mit einem zahlenmittleren Molekulargewicht von etwa 4 000 bis 20 000, wie z. B. etwa 7 700 bis 14 600; insbesondere Blockcopolymeren von Polyoxyethylen und Polyoxypropylen;

c) Polyvinylpyrrolidon, vorzugsweise mit einem zahlenmittleren Molekulargewicht von etwa 7 000 bis 1 000 000, wie z. B. etwa 44 000 bis 54 000;

d) Vinylpyrrolidon/Vinylacetat-Copolymere, vorzugsweise solche mit einem zahlenmittleren Molekulargewicht von etwa 30 000 bis 100 000, wie z. B. etwa 45 000 bis 70 000;

e) Polyvinylalkohole, vorzugsweise solche mit einem zahlenmittleren Molekulargewicht von etwa 10 000 bis 200 000, wie z. B. etwa 20 000 bis 100 000;

f) Modifizierte Cellulosen bzw. Cellulosederivate, wie z.B. Hydroxypropylmethylcellulose, vorzugsweise mit einem zahlenmittleren Molekulargewicht von etwa 6 000 bis 80 000, wie z. B. etwa 12 000 bis 65 000; aber auch Methylcellulose, Ethylcellulose und Hydroxyalkylcellulosen wie z.B. Hydroxyethylcellulose (HEC), Hydroxyethylmethylcellulose (HEMC), Ethylhydroxyethylcellulose (EHEC), Hydroxypropylcellulose (HPC) und

g) Polyvinylalkohol-Polyethylenglykol-Pfropfcopolymere;

h) Modifizierte Stärken (z.B. Umsetzungsprodukte aus Octenylsuccinatanhydrid (OSA) und Stärke).

Als Beispiele für geeignete Polyalkylenglykole a) sind zu nennen: Polypropylenglycole und insbesondere Polyethylenglycole unterschiedlicher Molmasse, wie z. B. PEG 4000 oder PEG 6000, erhältlich von der BASF AG unter den Handelsnamen Lutrol® E 4000 und Lutrol® E 6000 sowie die Kollidon-Marken der Fa. BASF.

Als Beispiele für obige Polymere b) sind zu nennen: Polyethylenoxide und Polypropylenoxide, Ethylenoxid/Propylenoxid-Mischpolymere sowie Blockcopolymere, aufgebaut aus Polyethylenoxid- und Polypropylenoxidblöcken, wie z. B. Polymere, die von der BASF AG unter der Handelsbezeichnung Lutrol® F68 und Lutrol® F127 erhältlich sind.

Als Beispiele für obige Polymere c) sind zu nennen: Polyvinylpyrrolidone, wie sie beispielsweise von der BASF AG unter dem Handelsnamen Kollidon® oder Luviskol® vertrieben werden.

Als Beispiel für oben genannte Polymere d) ist zu nennen: ein Vinylpyrrolidon/Vinyl-acetat-Copolymeres, welches von der BASF AG unter der Handelsbezeichnung Kollidon® VA64 vertrieben wird.

Als Beispiele für obige Polymere e) sind zu nennen: Produkte, wie sie beispielsweise von der Fa. Clariant unter der Handelsbezeichnung Mowiol® vertrieben werden.

Als Beispiele für geeignete Polymere f) sind zu nennen: Hydroxypropylmethylcellulosen, wie sie z. B. vertrieben werden von Shin Etsu unter dem Handelsnamen Pharmacoat®.

Beispiele für die Polymere g) sind die unter der Handelsbezeichnung Kollicoat® IR vertriebenen Produkte der BASF Aktiengesellschaft.

Es versteht sich, dass die erfindungsgemäßen Enzymgranulate neben der hydrophoben Beschichtung auch ein oder mehrere, z.B. 1, 2 oder 3 weitere Beschichtungen aufweisen können, die aus anderen Materialien bestehen, z.B. die im Stand der Technik gelehrten Beschichtungen. Erfindungswesentlich ist, dass wenigstens eine Beschichtung aus den hydrophoben Materialien besteht, wobei diese Schicht beliebig angeordnet sein kann und insbesondere direkt auf dem enzymhaltigen Kern angeordnet ist. Es besteht zudem die Möglichkeit, dass es sich bei mindestens einer Schicht um eine Salzschicht oder eine Schicht, die zu mindestens 30 % aus Salz besteht, handelt. Dabei wird eine solche Salzschicht bevorzugt zwischen dem Kern und der äußersten Schicht angeordnet sein. Die weiter oben genannten Salze können hier als Beispiel genannt werden.

Die erfindungsgemäßen Enzymgranulate können in Analogie zu bekannten Herstellungsverfahren für Enzymgranulate hergestellt werden, z.B. in Analogie zu den in WO 98/54980, WO 98/55599, WO 01/00042, WO 03/059086, WO 03/059087, WO 2004/108911 oder PCT/EP 2005/000826 beschriebenen Vorgehensweisen.

Gemäß einer bevorzugten Ausführungsform umfasst das Verfahren die folgenden Schritte:

a) Bereitstellung eines unbeschichteten, phytasehaltigen Rohgranulats, das wenigstens eine Phytase und wenigstens ein für Futtermittel geeignetes festes Trägermaterial umfasst, und das in der Regel einen Wassergehalt unterhalb 15 Gew.-%, häufig im Bereich von 1 bis 12 Gew.-%, insbesondere im Bereich von 3 bis 10 Gew.-% und speziell im Bereich von 5 bis 9 Gew.-%, bezogen auf das Gewicht des enzymhaltigen Rohgranulats, aufweist, und
b) Beschichten des Rohgranulats.

Die Herstellung des Rohgranulats kann grundsätzlich in beliebiger Weise erfolgen. Beispielsweise kann man ein Gemisch, umfassend den futtermitteltauglichen Träger, wenigstens ein in Wasser lösliches, neutrales Cellulosederivat und wenigstens ein Enzym und gegebenenfalls weitere Bestandteile wie Wasser, Puffer, stabilisierende Metallsalze, durch Extrusion, Mischergranulation, Wirbelschichtgranulation, Telleragglomeration oder Kompaktierung in an sich bekannter Weise zu einem Rohgranulat verarbeiten. Die Herstellung unbeschichteter Granulate erfolgt in gleicher Weise wie die Herstellung des Rohgranulats, mit dem Unterschied, dass das Granulat nicht beschichtet wird.

In einer bevorzugten Ausführungsform umfasst die Herstellung des Rohgranulats in einem ersten Schritt die Extrusion eines wasserhaltigen Teigs, der wenigstens ein Enzym und wenigstens ein inertes, vorzugsweise festes Trägermaterial, und gegebenenfalls weitere Bestandteile wie Wasser, Puffer, stabilisierende Metallsalze und Bindemittel in den oben angegebenen Mengen umfasst.

Vorzugsweise umfasst die Herstellung des Teigs eine Einstellung des pH-Wertes dergestalt, dass der Teig beim Suspendieren in Wasser einen pH-Wert im Bereich von 4,5 bis 6,5, bevorzugt 4,6 bis 6 und besonders bevorzugt von 4,7 bis 5,5 aufweist. Die Einstellung des pH-Wertes kann durch Zugabe eines Puffers oder einer Base zum Teig erfolgen. Vorzugsweise nimmt man eine Einstellung des pH-Wertes des Teigs dergestalt vor, dass man den Teig unter Verwendung eines wässrigen Enzymkonzentrats herstellt, dessen pH-Wert beim Verdünnen im Bereich von 4,5 bis 6,5, bevorzugt 4,6 bis 6 und besonders bevorzugt von 4,7 bis 5,5 liegt. Da das Enzymkonzentrat häufig einen schwach sauren pH-Wert unterhalb 4 aufweist wird man bevorzugt einen Puffer oder eine Base zusetzen. Geeignete Basen sind neben Ammoniak, Ammoniakwasser und Ammoniumhydroxid Alkalimetall- und Erdalkalimetallhydroxide, -citrate, -acetate, -formiate, -carbonate und -hydrogencarbonate sowie Amine und Erdalkalimetalloxide wie CaO und MgO. Beispiele für anorganische Pufferungsmittel sind Alkalimetallhydrogenphosphate, insbesondere Natrium- und Kaliumhydrogenphosphate, z.B. $K_2HPO_4$, $KH_2PO_4$ und $Na_2HPO_4$. Bevorzugtes Mittel zur Einstellung des pH-Wertes ist Ammoniak oder Ammoniakwasser, NaOH, KOH. Geeignete Puffer sind z.B. Mischungen der vorgenannten Basen mit organischen Säuren wie Essigsäure, Ameisensäure, Citronensäure.

Das Trägermaterial macht in der Regel 50 bis 96,9 Gew.-%, vorzugsweise 55 bis 94,8 Gew.-% und insbesondere 60 bis 89,7 Gew.-% der nichtwässrigen Bestandteile des Teigs aus. Das wenigstens eine, in Wasser lösliche, polymere Bindemittel macht in der Regel 0,1 bis 10 Gew.-%, vorzugsweise 0,15 bis 5 Gew.-%, insbesondere 0,2 bis 2 Gew.-% und speziell 0,3 bis 1 Gew.-%, der nichtwässrigen Bestandteile des Teigs aus. Das wenigstens eine Enzym macht in der Regel 3 bis 49,9 Gew.-%, insbesondere im Bereich von 5 bis 44,8 Gew.-% und speziell im Bereich von 10 bis 39,7 der nichtwässrigen Bestandteile des Teigs aus. Der Anteil sonstiger Bestandteile entspricht den oben für die Zusammensetzung des Kerns bzw. unbeschichteten Granulats angegebenen Mengenanteilen.

Neben den vorgenannten Bestandteilen enthält der Teig Wasser in einer Menge, die eine ausreichende Homogenisierung der den Teig bildenden Bestandteile und eine hinreichende Konsistenz (Plastifizierung) des Teigs für die Extrusion gewährleistet. Die hierfür erforderliche Wassermenge kann von einem Fachmann auf dem Gebiet der Enzymformulierung in an sich bekannter Weise ermittelt werden. Der Wasseranteil im Teig liegt typischerweise im Bereich von > 15 bis 50 Gew.-%, insbesondere im Bereich von 20 bis 45 Gew.-% und speziell im Bereich von 25 bis 40 Gew.-%, bezogen auf das Gesamtgewicht des Teigs.

Die Herstellung des Teigs erfolgt in an sich bekannter Weise durch Vermischen der den Teig bildenden Bestandteile in einer geeigneten Mischvorrichtung, beispielsweise in einem üblichen Mischer oder Kneter. Dazu werden der bzw. die Feststoffe, z.B. das Trägermaterial, mit der flüssigen Phase, beispielsweise Wasser, eine wässrige Bindemittel-Lösung oder ein wässriges Enzymkonzentrat intensiv vermischt. In der Regel wird man den Träger als Feststoff in den Mischer einbringen und mit einem wässrigen Enzymkonzentrat sowie mit dem wasserlöslichen Polymer, vorzugsweise in Form einer separaten wässrigen Lösung oder gelöst in dem wässrigen Enzymkonzentrat, sowie gegebenenfalls mit dem stabilisierenden Salz, vorzugsweise in Form einer separaten wässrigen Lösung oder Suspension, insbesondere gelöst oder suspendiert in dem wässrigen Enzymkonzentrat, vermischen. Gegebenenfalls wird man weiteres Wasser zur Einstellung der gewünschten Konsistenz des Teigs zufügen. Vorzugsweise wird man während des Durchmischens eine Temperatur von 60 °C, insbesondere von 40 °C nicht überschreiten. Besonders bevorzugt beträgt die Temperatur des Teigs während des Mischens 10 bis 30°C. Gegebenenfalls wird man daher die Mischvorrichtung während der Teigherstellung kühlen.

Der so erhaltene Teig wird anschließend einer Extrusion, vorzugsweise einer Extrusion bei niedrigem Druck unterworfen. Das Extrudieren, insbesondere das Extrudieren bei niedrigem Druck, erfolgt in der Regel in einem Apparat, bei dem die zu extrudierende Masse (Teig) durch eine Matrize gedrückt wird. Der Lochdurchmesser der Matrize bestimmt den Teilchendurchmesser und liegt in der Regel im Bereich von 0,3 bis 2 mm und insbesondere im Bereich von 0,4 bis 1,0 mm. Geeignete Extruder sind z. B. Dome-Extruder oder Korbextruder, die unter anderem von Firmen wie Fitzpatrick oder Bepex vertrieben werden. Bei richtiger Konsistenz der zu granulierenden Masse ergibt sich hierbei ein nur geringer Temperaturanstieg beim Passieren der Matrize (bis ca. 20 °C). Vorzugsweise erfolgt die Extrusion unter Temperaturkontrolle, d.h. die Temperatur des Teigs sollte während des Extrudierens eine Temperatur von 70 °C, insbesondere 60 °C nicht überschreiten. Insbesondere liegt die Temperatur des Teigs während der Extrusion im Bereich von 20 bis 50 °C.

Die den Extruder verlassenden extrudierten Teigstränge zerbrechen in kurze granulatartige Partikel oder können gegebenenfalls mit Hilfe geeigneter Schneidvorrichtungen gebrochen werden. Die so erhaltenen Granulatpartikel weisen typischerweise eine homogene Korngröße, d. h. eine enge Korngrößenverteilung auf.

Auf diese Weise erhält man ein Rohgranulat mit einem vergleichsweise hohen Wassergehalt, der in der Regel mehr als 15 Gew.-%, beispielsweise im Bereich von 15 bis 50 Gew.-%, insbesondere im Bereich von 20 bis 45 Gew.-%, bezogen auf das Gesamtgewicht des feuchten Rohgranulats beträgt. Erfindungsgemäß wird es daher vor dem Beschichten in einer Weise getrocknet, dass sein Wassergehalt nicht mehr als 15 Gew.-% beträgt und vorzugsweise im Bereich von 1 bis 12 Gew.-%, insbesondere im Bereich von 3 bis 10 Gew.-% und speziell im Bereich von 5 bis 9 Gew.-% liegt.

In der Regel wird man anschließend eine Konfektionierung des Rohgranulats durchführen. Die Konfektionierung umfasst dementsprechend in der Regel einen Trocknungsschritt. Dieser erfolgt bevorzugt in einem Wirbelschichttrockner. Hierbei wird ein erwärmtes Gas, in der Regel Luft oder ein Stickstoffgasstrom von unten durch die Produktschicht geleitet. Die Gasmenge wird üblicherweise so eingestellt, dass die Teilchen fluidisiert werden und wirbeln. Durch den Wärmeübergang Gas/Teilchen wird das Wasser verdunstet. Da enzymhaltige Rohgranulate in der Regel temperaturlabil sind, wird man darauf achten, dass die Temperatur des Rohgranulats nicht zu hoch ansteigt, d. h. in der Regel nicht über 80 °C und bevorzugt nicht über 70 °C. Insbesondere liegt die Temperatur des Granulats während des Trocknens im Bereich von 30 bis 70 °C. Die Trocknungstemperatur kann in einfacher Weise über die Temperatur des Gasstroms gesteuert werden. Die Temperatur des Gasstroms liegt typischerweise im Bereich von 140 bis 40°C und insbesondere im Bereich von 120 bis 60 °C. Die Trocknung kann kontinuierlich und diskontinuierlich erfolgen.

Nach der Trocknung kann das Granulat noch mittels eines Siebes fraktioniert werden (optional). Grob- und Feingut können gemahlen und in den Mischer zum Anmaischen der Granuliermasse rückgeführt werden.

Ferner hat es sich als vorteilhaft erwiesen, das noch feuchte Rohgranulat vor Durchführung der Trocknung zu runden, d.h. zu spheronisieren. Hierbei wird insbesondere die Bildung unerwünschter Staubanteile im Endprodukt verringert.

Zur Rundung der feuchten Rohgranulate geeignete Vorrichtungen sind sog. Spheronizer, die im Wesentlichen eine horizontal rotierende Scheibe, auf der die Stränglinge durch die Zentrifugalkraft an die Wand gedrückt werden, aufweisen. Die Stränglinge brechen an den durch den Extrusionsprozess vorgegebenen Mikrokerben auf, so dass zylinderförmige Teilchen mit einem Verhältnis von Durchmesser zu Länge von etwa 1:1,3 bis 1:3 entstehen. Durch die mechanische Beanspruchung im Spheronizer werden die zunächst zylinderförmigen Teilchen etwas gerundet.

Gemäß einer weiteren Ausführungsform erfolgt die Herstellung des Rohgranulats durch Sprühtrocknung, Sprühgranulierung, Sprühagglomeration, Kompaktierung, Granulation im high-shear-Mischer oder ähnlichen Apparaten und Verfahren, in denen mechanische Energie in Form von bewegten Bauteilen und/oder dem Einbringen eines Gasstroms eingetragen wird und so der Partikelaufbau bzw. die Rohgranulatherstellung erfolgt.

Eine weitere Alternative stellt auch die Rohgranulatherstellung durch Absorption dar. Hier wird das Enzymkonzentrat oder eine Enzymlösung mit einem Trägermaterial in Kontakt gebracht (durch Zugabe oder Aufsprühen der Lösung). Als Trägermaterialien kommen die weiter oben genannten Trägermaterialien infrage. Das Enzym diffundiert mit dem in der Lösung vorhandenen Lösungsmittel, vorzugsweise Wasser, bei diesem Verfahren teilweise oder vollständig in das Trägermaterial. Das Lösungsmittel, vorzugsweise Wasser, kann anschließend oder parallel durch thermische Verfahren entfernt werden. Dies kann z.B. in einer Wirbelschicht, einem Wirbelschichttrockner oder anderen Trocknern erfolgen.

Anschließend kann das so erhaltene Rohgranulat beschichtet werden. Hierzu wird man in an sich bekannter Weise eines der vorgenannten Beschichtungsmaterialien auf das Rohgranulat aufbringen. Das Aufbringen des die Beschichtung bildenden Materials kann in an sich bekannter Weise durch Aufbringen einer Lösung, Dispersion oder Suspension des die Beschichtung bildenden Materials in einem geeigneten Lösungsmittel, beispielsweise Wasser, oder durch Aufbringen einer Schmelze des Materials erfolgen. Das Aufbringen einer Schmelze ist erfindungsgemäß bevorzugt, weil hierdurch auf das anschließende Entfernen des Lösungs- oder Dispersionsmittels verzichtet werden kann. Das heißt, dass für das Aufbringen einer Schmelze die Verwendung eines teuren Trockners/Coaters (z.B. eines Wirbelschichttrockners) nicht erforderlich ist, sondern der Einsatz eines Mischers möglich wird. Das Beschichten mit einer Schmelze des Materials wird im Folgenden auch als Schmelzcoating bezeichnet.

Geeignete Verfahren zum Aufbringen der Beschichtung umfassen das Beschichten in einer Wirbelschicht bzw. im Wirbelbett, sowie das Beschichten in einem Mischer (kontinuierlich oder batchweise), z.B. in einer Granuliertrommel, einem Pflugscharmischer z.B. der Fa. Lödige, einem Paddel-Mischer z.B. der Firma Forberg, einem Nauta-Mischer, einem Granuliermischer, einem Granuliertrockner, einem Vakuumcoater z.B. der Fa. Forberg oder einem High-Shear-Granulator erfolgen.

Insbesondere erfolgt das Beschichten des Rohgranulats

i) in einer Wirbelschicht bzw. im Wirbelbett, z.B. durch Besprühen des Rohgranulates mit einer Schmelze, einer Lösung oder Dispersion des die Beschichtung bildenden Materials; sowie

ii) in einer der vorgenannten Mischvorrichtungen durch Einbringen des Rohgranulats in eine Schmelze des die Beschichtung bildenden Materials oder durch Besprühen oder Begießen des Rohgranulates mit einer Schmelze, einer Lösung oder Dispersion des die Beschichtung bildenden Materials.

Das Beschichten durch Besprühen des Rohgranulates mit einer Schmelze, einer Lösung oder Dispersion in einer Wirbelschicht bzw. im Wirbelbett ist erfindungsgemäß besonders bevorzugt. Das Besprühen des Rohgranulats mit einer Schmelze, einer Lösung oder Dispersion des Materials kann in der Wirbelschichtapparatur prinzipiell im Bottom-Spray-Verfahren (Düse sitzt im Anströmboden und sprüht nach oben) oder im Top-Spray-Verfahren (Coating wird von oben in die Wirbelschicht eingesprüht) durchgeführt werden.

Das Beschichten des Rohgranulats kann im Rahmen des erfindungsgemäßen Verfahrens kontinuierlich oder diskontinuierlich durchgeführt werden.

Gemäß einer ersten bevorzugten Ausführungsform des erfindungsgemäßen Verfahrens wird das Rohgranulat in einem Wirbelbett vorgelegt, verwirbelt und durch Aufsprühen einer wässrigen oder nichtwässrigen, vorzugsweise wässrigen Dispersion des die Beschichtung bildenden Materials mit diesem Material beschichtet. Dazu verwendet man vorzugsweise eine möglichst hochkonzentrierte, noch sprühfähige Flüssigkeit, wie z. B. eine 10 bis 50 Gew.-%ige wässrige Dispersion oder nichtwässrige Lösung oder Dispersion des Materials.

Das Aufsprühen der Lösung oder Dispersion des Materials wird vorzugsweise so durchgeführt, dass man das Rohgranulat in einer Wirbelschichtapparatur oder einem Mischer vorlegt und unter gleichzeitigem Erwärmen der Vorlage das Sprühgut aufsprüht. Die Energiezufuhr erfolgt in der Wirbelschichtapparatur durch Kontakt mit erwärmtem Trocknungsgas, häufig Luft. Eine Vorwärmung der Lösung oder Dispersion kann dann sinnvoll sein, wenn dadurch Sprühgut mit höherem Trockensubstanzanteil versprüht werden kann. Im Falle der Verwendung von organischen Flüssigphasen ist eine Lösungsmittelrückgewinnung zweckmäßig und der Einsatz von Stickstoff als Trocknungsgas zur Vermeidung explosionsfähiger Gasgemische bevorzugt. Die Produkttemperatur während des Beschichtens sollte im Bereich von etwa 30 bis 80 °C und insbesondere im Bereich von 35 bis 70 °C und speziell im Bereich von 40 bis 60 °C liegen. Das Beschichten kann in der Wirbelschichtapparatur prinzipiell im Bottom-Spray-Verfahren (Düse sitzt im Anströmboden und sprüht nach oben) oder im Top-Spray-Verfahren (Coating wird von oben in die Wirbelschicht eingesprüht) durchgeführt werden. Bei Einsatz eines Mischers zum Coaten muss nach dem Aufsprühen der Lösung oder Dispersion das Lösungsmittel oder die Flüssigkeit der Dispersion entfernt werden. Dies kann in einem Trockner durchgeführt werden.

Gemäß einer zweiten, besonders bevorzugten Ausführungsform des erfindungsgemäßen Verfahrens erfolgt die Beschichtung des in einem Wirbelbett oder Mischer vorgelegten Rohgranulats mittels einer Schmelze des die Beschichtung bildenden Materials. Das Schmelzcoating in einer Wirbelschicht wird vorzugsweise so durchgeführt, dass man das zu beschichtende Rohgranulat in der Wirbelschichtapparatur vorlegt. Das für die Beschichtung vorgesehene Material wird in einem externen Reservoir aufgeschmolzen und beispielsweise über eine beheizbare Leitung zur Sprühdüse gepumpt. Eine Erwärmung des Düsengases ist zweckmäßig. Sprührate und Eintrittstemperatur der Schmelze werden vorzugsweise so eingestellt, dass das Material noch gut auf der Oberfläche des Granulats verläuft und dieses gleichmäßig überzieht. Eine Vorwärmung des Granulats vor Einsprühung der Schmelze ist möglich. Bei Materialien mit hohem Schmelzpunkt wird man in der Regel die Temperatur so wählen, dass ein Verlust an Enzymaktivität weitgehend vermieden wird. Die Produkttemperatur sollte daher vorzugsweise im Bereich von etwa 30 bis 80 °C und insbesondere im Bereich von 35 bis 70 °C und speziell im Bereich von 40 bis 60 °C liegen. Auch das Schmelzcoating kann im Prinzip nach dem Bottom-Spray-Verfahren oder nach dem Top-Spray-Verfahren durchgeführt werden.

Das Schmelzcoating in einem Mischer kann auf zwei verschiedene Weisen durchgeführt werden. Entweder legt man das zu coatende Granulat in einem geeigneten Mischer vor und sprüht oder gießt eine Schmelze des Materials in den Mischer ein. Eine andere Möglichkeit besteht darin, das in fester Form vorliegende hydrophobe Material mit dem Produkt zu vermischen. Durch Zuführung von Energie über die Behälterwand oder über die Mischwerkzeuge wird das hydrophobe Material aufgeschmolzen und überzieht so das Rohgranulat. Je nach Bedarf kann von Zeit zu Zeit etwas Trennmittel zugegeben werden. Geeignete Trennmittel sind beispielsweise Kieselsäure, Talkum, Stearate und Tricalciumphosphat, oder Salze wie Magnesiumsulfat, Natriumsulfat oder Calciumcarbonat.

Den zur Beschichtung verwendeten Lösungen, Dispersionen oder Schmelzen können gegebenenfalls weitere Zusätze, wie z. B. mikrokristalline Cellulose, Talkum und Kaolin, oder Salze zugesetzt werden.

In einer besonderen erfindungsgemäßen Ausführungsform des Verfahrens kann auf die Zugabe von Trennmitteln während des Aufbringens des Materials oder der Zusatz von Trennmittel zur aufzubringenden Lösung, Dispersion oder Schmelze verzichtet werden. Dies ist insbesondere dann möglich, wenn die verwendeten Enzymkerne mittlere Partikelgrößen von wenigstens 300 $\mu$m, vorzugsweise wenigstens 350 $\mu$m, insbesondere wenigstens 400 $\mu$m aufweisen, z.B. im Bereich von 300 bis 800 $\mu$m, vorzugsweise im Bereich von 350 $\mu$m bis 750 $\mu$m und insbesondere im Bereich von 400 $\mu$m bis 700 $\mu$m, liegen und gleichzeitig die Menge an verwendetem Coating-Material bezogen auf das Gesamtpartikel nicht mehr als 30 Gew.-%, vorzugsweise nicht mehr als 25 Gew.-%, insbesondere nicht mehr als 20 Gew.-% und speziell nicht mehr als 17 Gew.-% beträgt. In diesen Fällen lassen sich Enzymkerne besonders gut ohne Agglomeration der Partikel beschichten.

Die Zugabe eines Fließhilfsmittels nach dem Coatingschritt kann die Fließeigenschaften des Produktes verbessern. Typische Fließhilfsmittel sind Kieselsäuren, z.B. die Sipemat-Produkte der Fa. Degussa oder die Tixosil-Produkte der Fa. Rhodia, Talkum, Stearate und Tricalciumphosphat oder Salze wie Magnesiumsulfat, Natriumsulfat oder Calciumcarbonat. Die Fließhilfsmittel werden, bezogen auf das Gesamtgewicht des Produktes, in einer Menge von 0,005 Gew.-% bis 5 Gew.-% dem beschichteten Produkt zugegeben. Bevorzugte Gehalte sind 0,1 Gew.-% bis 3 Gew.-% und besonders bevorzugt sind 0,2 Gew.-% bis 1,5 Gew.-%.

In einem weiteren Aspekt der Erfindung werden die beschichteten oder unbeschichteten Enzymgranulate mit einem inerten Trägermaterial gemischt, um so ein Futtermittelzusatz herzustellen, der eine geringere Enzymaktivität aufweist als das Enzymgranulat selbst. Bevorzugte Trägermaterialien sind die oben genannten Trägermaterialien oder organische Stoffe, wie z.B. Kleien, Grieß, Schrot oder Mehle von Roggen, Kartoffel, Weizen, Mais oder anderen nachwachsenden Rohstoffen, bevorzugt Rohstoffe, die in Tierfuttern üblicherweise eingesetzt werden.

Ein weiterer Gegenstand der Erfindung betrifft Futtermittelzusammensetzungen, insbesondere pelletierte Futtermittelzusammensetzungen, welche neben üblichen Bestandteilen wenigstens einen Futtermittelzusatz gemäß obiger Definition als Beimischung enthalten.

Schließlich betrifft die Erfindung auch die Verwendung eines Futtermittelzusatzes nach obiger Definition zur Herstellung von Futtermittelzusammensetzungen, insbesondere von hydrothermisch behandelten und speziell von pelletierten Futtermittelzusammensetzungen.

Zur Herstellung der Futtermittelzusammensetzungen werden die erfindungsgemäß hergestellten beschichteten oder unbeschichteten Enzymgranulate mit üblichem Tierfutter (wie z. B. Schweinemastfutter, Ferkelfutter, Sauenfutter, Broilerfutter und Putenfutter) vermischt. Der Enzymgranulatanteil wird so gewählt, dass der Enzymgehalt z. B. im Bereich von 10 bis 1000 ppm liegt. Anschließend wird das Futter mit Hilfe einer geeigneten Pelletpresse pelletiert. Dazu wird das Futtergemisch üblicherweise durch Dampfeinleitung konditioniert und anschließend durch eine Matrize gepresst.

Je nach Matrize können so Pellets von etwa 2 bis 8 mm Durchmesser hergestellt werden. Die höchste Prozesstemperatur tritt dabei beim Konditionieren oder beim Pressen des Gemisches durch die Matrize auf. Hier können Temperaturen im Bereich von etwa 60 bis 100 °C erreicht werden.

Die folgenden Beispiele dienen der Erläuterung der Erfindung

Beispiel 1 (nicht erfindungsgemäß):

a) In einem wässrigen Phytasekonzentrat mit einem Trockenmassegehalt von etwa 25 bis 35 Gew.-%, einem pH-Wert im Bereich von 3,7-3,9 und einer Aktivität von 26000 bis 36000 FTU/g löste man bei 4-10°C 1 Gew.-% Zinksulfat-Hexahydrat, bezogen auf das Konzentrat.

b) In einem Mischer mit Choppermesser legte man 700 g Maisstärke und 52 g mikrokristalline Cellulose vor, homogenisierte und gab hierzu langsam bei Temperaturen von 10 bis 30°C unter Homogenisieren gleichzeitig 630 g des Zinksulfathaltigen Phytasekonzentrats und 20 g Wasser zu. Man homogenisierte unter Kühlen des Mischers weitere 5 min bei Temperaturen im Bereich von 10 bis 50°C, überführte dann den so erhaltenen Teig in einen Dome-Extruder und extrudierte den Teig bei Temperaturen im Bereich von 30 bis 50°C durch eine Matrize mit einem Lochdurchmesser von 0,7 mm zu 5 cm langen Strängen.

c) Das so erhaltene Extrudat wurde in eine Rundungsmaschine (Typ P50, Firma Glatt) 5 min. bei 350 min$^{-1}$ (Drehzahl des rotierenden Tellers) gerundet und anschließend in einem Wirbelschichttrockner (Laborwirbelbett Aeromat Typ MP-1 der Fa. Niro-Aeromatic) bei einer Temperatur von bis zu 40 °C (Produkttemperatur) auf eine Restfeuchte von etwa 6 Gew.-% getrocknet.

Das so erhaltene Granulat wies eine Aktivität von ca. 18700 FTU/g auf. Die Granulate hatten eine Korngröße von maximal 1300 $\mu$m und eine mittlere Partikelgröße von 580 $\mu$m (Siebanalyse).

Man erhielt ein Produkt mit folgender Zusammensetzung:

Zusammensetzung:

| | |
|---|---|
| Maisstärke | 62,4 Gew.-% |
| Phytase (Trockenmasse) | 26 Gew.-% |
| Mikrokristalline Cellulose: | 5 Gew.-% |
| Zinksulfat ($ZnSO_4$): | 0,6 Gew.-% |
| Restfeuchte: | 6 Gew.-% |

Beispiel 2:

Aus dem Enzymgranulat aus Beispiel 1 wurde mittels Rüttelsieb (Fa. Retsch) eine Fraktion an Feinanteil gewonnen. Hierzu wurden 200 g des Enzymgranulats auf ein Sieb mit der Maschenweite 425 $\mu$m gegeben und 15 min ausgesiebt. Es konnte ein Feinanteil (<425 $\mu$m) von 38 g gewonnen werden. Die Granulate des Feinanteils hatten eine mittlere Partikelgröße von ca. 410 $\mu$m (mittels Mastersizer S bestimmt). Die Aktivität des Feinanteils betrug 18800 FTU/g.

Beispiel 3 (nicht erfindungsgemäß):

Aus dem Enzymgranulat aus Beispiel 1 wurde mittels Rüttelsieb (Fa. Retsch) eine Fraktion an groben Partikeln gewonnen. Hierzu wurden 200 g des Enzymgranulats auf Siebe mit der Maschenweite 850 und 600 $\mu$m gegeben und 10 min ausgesiebt. Es konnte eine Zwischenfraktion (>600 $\mu$m und <850 $\mu$m) von 28 g gewonnen werden. Die Granulate dieser groben Zwischenfraktion hatten eine mittlere Partikelgröße von 750 $\mu$m (mittels Siebanalyse bestimmt). Die Aktivität des Grobanteils betrug 18800 FTU/g.

Versuch 1: Bestimmung der Dosiergenauigkeit

Zur Beurteilung der Dosiergenauigkeit der unter Beispiel 2 und 3 beschriebenen Enzymgranulate wurde wie im Folgenden beschrieben ein Abmischversuch mit anschließender Bestimmung der Enzymaktivität durchgeführt. Dazu wurde 1 kg eines Futters in einem Lödigemischer vorgelegt und homogenisiert. Als Futter wurde ein praxisübliches Broilerfutter mit folgender Zusammensetzung eingesetzt:

| | |
|---|---|
| Mais | 53,79 % |
| HP Sojaschrot | 36,00 % |
| Sojaöl | 6,00 % |
| DL-Methionin | 0,31 % |
| L-Lysin | 0,10 % |
| Threonin | 0,05 % |
| Viehsalz | 0,38 % |
| Futterkalk | 1,32 % |
| Cholinchlorid 50 % | 0,10 % |
| Bolifor MCP-F | 1,45 % |
| Vitamin/Spurenelementpremix | 0,50 % |

Es wurde dann jeweils durch Zugabe des Enzymgranulats aus Beispiel 2 und 3 eine rechnerische Zielaktivität im Futter von 500 FTU/kg eingestellt. Hierzu musste auf Basis der analysierten Aktivität des Enzymgranulats jeweils 0,0267 g des Granulats aus Beispiel 2 bzw. Beispiel 3 eingemischt werden. Es wurde jeweils 10 min gemischt. Nach dem Mischen wurden aus jedem Ansatz jeweils 10 Proben von jeweils 50 g entnommen und deren Enzymaktivität bestimmt. In der nachfolgenden Tabelle sind die Ergebnisse zusammengefasst:

| Granulat | Granulat aus Bsp. 2 | Granulat aus Bsp. 3 |
|---|---|---|
| Mittlere Partikeldurchmesser [$\mu$m] | 410 | 750 |
| Aktivität des Granulats [FTU/g] | 18800 | 18800 |
| Eingewogene Granulatmenge auf 1 kg Futter [g] | 0,0267 | 0,0267 |
| Zielaktivität im Futter [FTU/kg] | 500 | 500 |
| Aktivität im Futter, Probe 1 [FTU/kg] | 755 | 604 |
| Aktivität im Futter, Probe 2 [FTU/kg] | 475 | 886 |
| Aktivität im Futter, Probe 3 [FTU/kg] | 585 | 589 |
| Aktivität im Futter, Probe 4 [FTU/kg] | 822 | 279 |
| Aktivität im Futter, Probe 5 [FTU/kg] | 493 | 1126 |
| Aktivität im Futter, Probe 6 [FTU/kg] | 544 | 729 |
| Aktivität im Futter, Probe 7 [FTU/kg] | 289 | 507 |
| Aktivität im Futter, Probe 8 [FTU/kg] | 582 | 509 |
| Aktivität im Futter, Probe 9 [FTU/kg] | 587 | 1107 |
| Aktivität im Futter, Probe 10 [FTU/kg] | 530 | 683 |
| Gemittelte Aktivität im Futter [FTU/kg] | 566 | 702 |
| Standardabweichung Aktivität im Futter [FTU/kg] | **147** | **270** |

Die Standardabweichung der Aktivität im Futter ist bei dem gröberen Granulat (Bsp. 3) größer als bei dem Granulat aus Beispiel 2.

**Patentansprüche**

1. Phytasehaltiges Enzymgranulat für Futtermittel, dessen Teilchen eine gewichtsmittlere Teilchengröße im Bereich von 350 bis 550 $\mu$m aufweisen und dessen spezifische Phytaseaktivität, ausgedrückt in FTU/g, mindestens 7000 beträgt und einen Wert von

$$FTU_{max} = 2000 \ [FTU \ g^{-1}] \cdot D^{-3} \cdot mm^3$$

nicht überschreitet,
wobei D für den gewichtsmittleren Teilchendurchmesser der Granulat-Teilchen in mm steht.

2. Enzymgranulat nach Anspruch 1, wobei 90 Gew.-% der Teilchen einen Teilchendurchmesser von mehr als 100 $\mu$m aufweisen ($D_{10}$-Wert).

3. Enzymgranulat nach Anspruch 1 oder 2, wobei 90 Gew.-% der Teilchen einen Teilchendurchmesser von nicht mehr als 1200 $\mu$m aufweisen ($D_{90}$-Wert).

4. Enzymgranulat nach einem der vorhergehenden Ansprüche, wobei die Teilchengrößenverteilung der Granulatteilchen durch einen Wert $D_{90}/D_{10} < 3{,}5$ charakterisiert ist.

5. Enzymgranulat nach einem der vorhergehenden Ansprüche, wobei die Teilchen des Granulats einen Rundheitsfaktor kleiner 2 aufweisen.

6. Enzymgranulat nach einem der vorhergehenden Ansprüche umfassend neben der Phytase wenigstens ein für Futtermittel geeignetes festes Trägermaterial.

7. Enzymgranulat nach einem der vorhergehenden Ansprüche, wobei die Teilchen des Granulats

   A) einen Kern, welcher wenigstens eine Phytase und wenigstens ein für Futtermittel geeignetes festes Trägermaterial umfasst, und
   b) eine auf dem Kern angeordnete Beschichtung aufweisen.

8. Enzymgranulat nach Anspruch 7, wobei wenigstens eine, auf der Oberfläche des Kerns angeordnete Beschichtung zu wenigstens 70 Gew.-% aus Substanzen, ausgewählt unter Wachsen, gesättigten Fettsäuren, den Estern gesättigter Fettsäuren, Polyolefinen, Cellulosederivaten, Polyvinylacetat, Polyvinylpyrrolidon, Polyvinylalkohol, Vinylacetat/Vinylpyrrolidon-Copolymeren, Polyalkylenglykolen und deren Mischungen, besteht.

9. Enzymgranulat nach einem der Ansprüche 7 oder 8, wobei die wenigstens eine, auf der Oberfläche des Kerns angeordnete Beschichtung zu wenigstens 90 Gew.-% aus in Wasser unlöslichen hydrophoben Substanzen besteht.

10. Enzymgranulat nach einem der Ansprüche 7 bis 9, wobei das Gewichtsverhältnis von Kern zu Beschichtung im Bereich von 70:30 bis 99:1 liegt.

11. Enzymgranulat nach einem der Ansprüche 6 bis 10, wobei das Trägermaterial wenigstens ein in Wasser unlösliches polymeres Kohlenhydrat umfasst.

12. Enzymgranulat nach einem der vorhergehenden Ansprüche, umfassend zusätzlich ein in Wasser lösliches Bindemittel.

13. Enzymgranulat nach Anspruch 12, wobei das in Wasser lösliche Bindemittel ausgewählt ist unter Polyvinylalkohol und wasserlöslichen Polysacchariden.

14. Enzymgranulat nach Anspruch 13, wobei das in Wasser lösliche, polymere Bindemittel, einen neutralen Celluloseether, insbesondere Methylcellulose, umfasst.

15. Enzymgranulat nach einem der vorhergehenden Ansprüche umfassend zusätzlich ein das Enzym stabilisierendes Salz.

16. Enzymgranulat nach Anspruch 15, wobei das Salz ausgewählt ist unter Zinksulfat und Magnesiumsulfat.

**17.** Verwendung eines phytasehaltigen Enzymgranulats nach einem der Ansprüche 1 bis 16 in Futtermitteln.

**18.** Futtermittel, enthaltend wenigstens ein phytasehaltiges Enzymgranulat nach einem der Ansprüche 1 bis 16 und übliche Futtermittelbestandteile.

**19.** Futtermittel nach Anspruch 18 in Form eines pelletierten Futtermittels.

**Claims**

**1.** Phytase-comprising enzyme granules for feeds, the particles of which have a weight-average particle size in the range from 350 to 550 $\mu$m and the specific phytase activity of which, expressed in FTU/g, is at least 7 000 and does not exceed a value of

$$FTU_{max} = 2000 \; [FTU \; g^{-1}] \; \ast \; D^{-3} \; \ast \; mm^3,$$

D being the weight-average particle diameter of the granule particles in mm.

**2.** The enzyme granules according to claim 1, 90% by weight of the particles having a particle diameter of greater than 100 $\mu$m ($D_{10}$ value) .

**3.** The enzyme granules according to claim 1 or 2, 90% by weight of the particles having a particle diameter of no greater than 1200 $\mu$m ($D_{90}$ value).

**4.** The enzyme granules according to one of the preceding claims, the particle size distribution of the granule particles being **characterized by** a $D_{90}/D_{10}$ value < 3.5.

**5.** The enzyme granules according to one of the preceding claims, the granule particles having a roundness factor less than 2.

**6.** The enzyme granules according to one of the preceding claims comprising, in addition to the phytase, at least one solid carrier material suitable for feeds.

**7.** The enzyme granules according to one of the preceding claims, the particles of the granule having

A) a core which comprises at least one phytase and at least one solid carrier material suitable for feeds, and
b) a coating arranged on the core.

**8.** The enzyme granules according to claim 7, at least 70% by weight of the at least one coating arranged on the surface of the core comprising substances selected from waxes, saturated fatty acids, the esters of saturated fatty acids, polyolefins, cellulose derivatives, polyvinyl acetate, polyvinylpyrrolidone, polyvinyl alcohol, vinyl acetate/vinylpyrrolidone copolymers, polyalkylene glycols and mixtures thereof.

**9.** The enzyme granules according to one of claims 7 or 8, at least 90% by weight of the at least one coating arranged on the surface of the core comprising water-insoluble hydrophobic substances.

**10.** The enzyme granules according to one of claims 7 to 9, the weight ratio of core to coating being in the range from 70:30 to 99:1.

**11.** The enzyme granules according to one of claims 6 to 10, the carrier material comprising at least one water-insoluble polymeric carbohydrate.

**12.** The enzyme granules according to one of the preceding claims, comprising, in addition, a water-soluble binder.

**13.** The enzyme granules according to claim 12, the water-soluble binder being selected from polyvinyl alcohol and water-soluble polysaccharides.

**14.** The enzyme granules according to claim 13, the water-soluble polymeric binder comprising a neutral cellulose ether, in particular methylcellulose.

**15.** The enzyme granules according to one of the preceding claims, additionally comprising a salt stabilizing the enzyme.

**16.** The enzyme granules according to claim 15, the salt being selected from zinc sulfate and magnesium sulfate.

**17.** The use of phytase-comprising enzyme granules according to one of claims 1 to 16 in feeds.

**18.** A feed comprising at least one type of phytase-comprising enzyme granule according to one of claims 1 to 16 and customary feed components.

**19.** The feed according to claim 18 in the form of a pelleted feed.

**Revendications**

**1.** Granulat enzymatique contenant de la/des phytase(s) pour un aliment pour animaux, dont les particules présentent une taille pondérale moyenne de particule dans la plage de 350 à 550 $\mu$m et dont l'activité de phytase spécifique, exprimée en FTU/g, est d'au moins 7000 et ne dépasse pas une valeur de

$$\mathrm{FTU_{max}} = 2000\,[\mathrm{FTU\ g^{-1}}] \star D^{-3} \star \mathrm{mm}^3$$

D représentant le diamètre pondéral moyen des particules du granulat en mm.

**2.** Granulat enzymatique selon la revendication 1, 90% en poids des particules présentant un diamètre de particule supérieur à 100 $\mu$m (valeur $D_{10}$).

**3.** Granulat enzymatique selon la revendication 1 ou 2, 90% en poids des particules présentant un diamètre de particule qui n'est pas supérieur à 1200 $\mu$m (valeur $D_{90}$).

**4.** Granulat enzymatique selon l'une quelconque des revendications précédentes, la répartition granulométrique des particules du granulat étant **caractérisée par** une valeur $D_{90}/D_{10}$ < 3, 5.

**5.** Granulat enzymatique selon l'une quelconque des revendications précédentes, les particules du granulat présentant un facteur de sphéricité inférieur à 2.

**6.** Granulat enzymatique selon l'une quelconque des revendications précédentes, comprenant, outre la/les phytase(s), au moins un matériau support solide approprié pour les aliments pour animaux.

**7.** Granulat enzymatique selon l'une quelconque des revendications précédentes, les particules du granulat présentant

A) un noyau qui comprend au moins une phytase et au moins un matériau support solide approprié pour des aliments pour animaux, et
b) au moins un revêtement disposé sur le noyau.

**8.** Granulat enzymatique selon la revendication 7, au moins un revêtement, disposé à la surface du noyau, étant constitué, à raison d'au moins 70% en poids, de substances choisies parmi les cires, les acides gras saturés, les esters d'acides gras saturés, les polyoléfines, les dérivés de cellulose, le poly(acétate de vinyle), la polyvinylpyrrolidone, le poly(alcool vinylique), les copolymères d'acétate de vinyle/vinylpyrrolidone, les polyalkylèneglycols et leurs mélanges.

**9.** Granulat enzymatique selon l'une quelconque des revendications 7 ou 8, ledit au moins un revêtement disposé à la surface du noyau étant constitué, à raison d'au moins 90% en poids, de substances hydrophobes insolubles dans l'eau,

**10.** Granulat enzymatique selon l'une quelconque des revendications 7 à 9, le rapport pondéral de noyau à revêtement étant situé dans la plage de 70:30 à 99:1.

**11.** Granulat enzymatique selon l'une quelconque des revendications 6 à 10, le matériau support comprenant au moins un hydrate de carbone polymère insoluble dans l'eau.

**12.** Granulat enzymatique selon l'une quelconque des revendications précédentes, comprenant en outre un liant soluble dans l'eau.

**13.** Granulat enzymatique selon la revendication 12, le liant soluble dans l'eau étant choisi parmi le poly(alcool vinylique) et les polysaccharides solubles dans l'eau.

**14.** Granulat enzymatique selon la revendication 13, le liant polymère, soluble dans l'eau comprenant un éther de cellulose neutre, en particulier la méthylcellulose.

**15.** Granulat enzymatique selon l'une quelconque des revendications précédentes, comprenant en outre un sel stabilisant l'enzyme.

**16.** Granulat enzymatique selon la revendication 15, le sel étant choisi parmi le sulfate de zinc et le sulfate de magnésium.

**17.** Utilisation d'un granulat enzymatique contenant une/des phytase(s) selon l'une quelconque des revendications 1 à 16 dans des aliments pour animaux.

**18.** Aliment pour animaux, contenant au moins un granulat enzymatique contenant une/des phytase(s) selon l'une quelconque des revendications 1 à 16 et des constituants usuels pour aliments pour animaux.

**19.** Aliment pour animaux selon la revendication 18 sous forme d'un aliment pour animaux pelletisé.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9854980 A
- WO 200047060 A
- WO 03059086 A
- WO 200125412 A
- WO 2004108911 A
- WO 2005074707 A
- EP 1645195 A
- EP 1508281 A
- EP 1457560 A
- US 20030054511 A
- WO 0183727 A

- EP 420358 A
- EP 684313 A
- EP 897010 A
- EP 897985 A
- EP 10420358 A
- WO 9403072 A
- WO 9855599 A
- WO 9949022 A
- WO 0043503 A
- WO 03102174 A

**In der Beschreibung aufgeführte Nicht-Patentliteratur**

- **ENGELEN et al.** Determination of Phytase Activity in Feed by a Colorimetric Enzymatic Method. *Journal of AOAC International,* 2001, vol. 84 (3

- **ENGELEN et al.** *Journal of AOAC International,* 1994, vol. 77 (3